# EUROPÄISCHE PATENTSCHRIFT

(11) **EP 1 431 148 B1**
(45) Veröffentlichungstag und Bekanntmachung des Hinweises auf die Patenterteilung: **07.12.2005**
(21) Anmeldenummer: 03028923.5
(22) Anmeldetag: 17.12.2003
(51) Int. Cl.: B60T 7/10

(54) **Feststellbremse für ein Kraftfahrzeug und Kraftfahrzeug mit einer Feststellbremse**
Parking brake for a vehicle and vehicle having a parking brake
Frein de stationnement pour véhicule et véhicule avec un frein de stationnement

(30) Priorität: 18.12.2002 DE 10259092
(43) Veröffentlichungstag der Anmeldung: 23.06.2004
(73) Patentinhaber: ADAM OPEL AG, 65423 Rüsselsheim (DE)
(72) Erfinder: Larsen, Danny-Brian, 65428 Rüsselsheim (DE)

(56) Entgegenhaltungen:
- DE-A- 1 630 880
- DE-C- 10 029 750
- FR-A- 2 742 399
- US-A- 4 856 363

## Beschreibung

Die Erfindung bezieht sich auf eine Feststellbremse für ein Kraftfahrzeug mit einem einen Handgriff über ein mindestens einen oberen und einen unteren Lenker umfassendes Hebelgestänge lagernden Träger und einer bei einer Verlagerung des Handgriffs mindestens ein Bremsseil beaufschlagenden Kopplungsvorrichtung, wobei der obere Lenker und der untere Lenker derart an mindestens einem senkrecht zum Handgriff erstreckenden Fortsatz und/oder an einem sich in Richtung des Trägers erstreckenden, zum freien Ende beabstandeten Ansatz des Fortsatzes beabstandet zueinander gelagert sind, dass eine Beaufschlagungsrichtung des Handgriffes parallel zu einer Längsachse des Fortsatzes ausgerichtet ist und ein Kraftfahrzeug mit einer Feststellbremse.

Die DE 1 630 880 A1 offenbart eine Handbrems-Feststellanordnung für ein Kraftfahrzeug, die von einer Stirnwand aus in einen Fahrgastraum hineinragt und in mindestens einem Punkt ihrer Lage gehalten ist. Die Handbrems-Feststellanordnung umfasst ein Führungsrohr, das den zum Anziehen der Bremse dienenden Handstock aufnimmt und in der Stirnwand gelagert sowie in der Nähe des in den Fahrgastraum hineinragenden Endes gehaltert ist. Diese Handbrems-Feststellanordnung ist unter dem Armaturenbrett angeordnet und bringt den Vorteil mit sich, dass es nicht erforderlich ist, zwischen den vorderen Sitzen eine Mittelkonsole zur Anordnung einer Feststellbremse vorzusehen. In einem modernen Kraftfahrzeug ist eine solche Handbrems-Feststellanordnung jedoch nicht unterzubringen, da sich das Armaturenbrett zur Aufnahme und Überdeckung einer Vielzahl von Geräten und Instrumenten bis weit in Richtung des Fußraums erstreckt und somit kein Einbauplatz für eine sich von der Stirnwand aus in den Fahrgastraum ragende Handbrems-Feststellanordnung mehr vorhanden ist.

Im Weiteren zeigt die DE 100 29 750 C1 eine Feststellbremse für ein Fahrzeug, die einen Bremsbetätigungshebel, der gelenkig an einem Hebelhalter angeordnet ist, eine Ankopplungseinheit, die ein Bremsseil bei der Verlagerung des Bremsbetätigungshebels spannt, und eine Feststelleinrichtung, um den Bremsbetätigungshebel in einer Feststellposition zu halten, umfasst. Der Bremsbetätigungshebel ist über ein Mehrgelenk mit dem Hebelhalter schwenkbar verbunden. Beim Anziehen der Feststellbremse bleibt der plattenförmige Bremsbetätigungshebel aufgrund des ihm zugeordneten und mit dem Hebelhalter verbundenen Mehrgelenks in einer im Wesentlichen waagerechten Lage. Zum Anziehen der Feststellbremse wird der Bremsbetätigungshebel mit einer sowohl nach oben als auch nach hinten gerichteten Kraft beaufschlagt, worauf er in einer kreisförmigen Bewegung gleichzeitig nach oben und nach hinten verlagert wird.

Die den nächstliegenden Stand der Technik bildende FR-A-2 742 399 offenbart eine Feststellbremse für ein Kraftfahrzeug mit einem einen Handgriff über ein einen oberen und einen unteren Lenker umfassendes Hebelgestänge lagernden Träger und einer bei einer Verlagerung des Handgriffs ein Bremsseil beaufschlagenden Kopplungsvorrichtung.

Es ist Aufgabe der Erfindung, eine Feststellbremse und ein Kraftfahrzeug der eingangs genannten Art zu schaffen, bei der eine ergonomische Gestaltung sowie eine Übertragung relativ großer Beaufschlagungskräfte bei einer sicheren Führung des Handgriffes gewährleistet ist.

Erfindungsgemäß wird die Aufgabe dadurch gelöst, dass der Handgriff jeweils endseitig mit einem einen Ansatz aufweisenden Fortsatz versehen ist, wobei an jedem Fortsatz ein unterer Lenker und an jedem Ansatz ein oberer Lenker unter Zwischenordnung des Trägers angelenkt ist und der Ansatz zum freien Ende des Fortsatzes beabstandet ist.

Aufgrund dieser Maßnahmen wird eine ergonomisch gestaltete Feststellbremse zur Verfügung gestellt, deren Betätigung durch eine geradlinige Kraftbeaufschlagung erfolgt. Hierbei ist es möglich, den Handgriff derart auszurichten, dass dessen Verlagerungsrichtung beim Anziehen der Feststellbremse zur Schulter eines Benutzers der Feststellbremse weist, um einen natürlichen Bewegungsablauf sowie eine effektive Umsetzung der Beaufschlagungskraft zu erzielen. Die Anordnung der Lenker an dem Fortsatz stellt gegenüber dem zuvor beschriebenen Stand der Technik eine relativ geringfügige kreisende Bewegung des Fortsatzes mit dem Handgriff sicher und die Hauptverlagerungsrichtung des Handgriffes korrespondiert im Wesentlichen zur Längsachse des Fortsatzes. Dahingegen beschreibt der Bremsbetätigungshebel der in der DE 100 29 750 C1 gezeigten Feststellbremse bei einer Beaufschlagung eine Kreisbahn um einen momentanen Pol außerhalb des Hebelhalters, wobei die Kraftbeaufschlagung ebenfalls gemäß dieser Kreisbahn erfolgt. Aufgrund der Anordnung des Handgriffes zwischen den Fortsätzen ist die Übertragung relativ großer Beaufschlagungskräfte bei einer sicheren Führung des Handgriffes gewährleistet.

Zweckmäßigerweise ist der obere Lenker U-förmig ausgebildet, wobei die freien Enden der Schenkel an dem Träger gelagert sind und der die Schenkel verbindende Steg sich zwischen den beiden Ansätzen erstreckt. Damit weist das Hebelgestänge eine relativ verwindungsfreie Konstruktion auf und beabstandet die beiden Fortsätze des Handgriffs, wobei das Abstandsmaß durch die Länge des Steges vorgegeben ist. Zur Erzielung einer Hebelwirkung sind die unteren Lenker und der obere Lenker zueinander beabstandet an Flanschen des Trägers angelenkt.

Zur kraftfahrzeugseitigen Befestigung umfasst bevorzugt der Träger eine an den Flanschen festgelegte Befestigungskonsole. Zweckmäßigerweise erstreckt sich die Befestigungskonsole in Richtung des Handgriffs.

Um einen freien Durchgang zwischen zwei Vordersitzen eines Kraftfahrzeuges zu schaffen, ist nach einer vorteilhaften Ausgestaltung der Erfindung die Befestigungskonsole derart ausgerichtet, dass sie zur Befestigung an einem einen Schaltknüppel lagernden Schaltgehäuse hinter einer Armaturentafel dient. Damit ist die Anordnung einer Mittelkonsole zur Befestigung eines Trägers nicht erforderlich und der von der Mittelkonsole üblicherweise beanspruchte Platz zwischen den beiden Vordersitzen steht als Durchgang zur Verfügung.

Zum Spannen und Lösen des Bremsseils beaufschlagt vorzugsweise der obere Lenker die Kopplungsvorrichtung.

Für eine kerbwirkungsfreie und zuverlässige Halterung der Bremsseile ist vorteilhafterweise die Kopplungsvorrichtung mit zwei drehfest miteinander verbundenen Seilscheibensegmenten mit jeweils zugeordneter Bremsseilbefestigung versehen.

Um eine gleichmäßige Beaufschlagung der Bremsseile bei einer Verlagerung des Handgriffes zu gewährleisten, sind vorzugsweise die Seilscheibensegmente über einen Steg gekoppelt.

Zum Ausgleichen von Längentoleranzen der Bremsseile sowie zum Nachspannen der Bremsseile sind bevorzugt die Seilscheibensegmente mit einer Justiervorrichtung zum Vorspannen der Bremsseile verbunden.

Bevorzugt umfasst die Justiereinrichtung eine Stellschraube, die zum Verdrehen der Scheibensegmente zwischen der Bremsseilbefestigung und dem die Seilscheibensegmente verbindenden Steg wirkt. Die Justiervorrichtung weist somit einen relativ einfachen Aufbau auf, und gewährleistet ein leichtes Vorspannen der Bremsseile mittels der Stellschraube.

Erfindungsgemäß wird die Aufgabe auch gelöst bei einem Kraftfahrzeug mit einer zuvor erläuterten Feststellbremse und mit einer Armaturentafel, wobei der Träger hinter der Armaturentafel angeordnet ist und der Handgriff zwischen zwei sich senkrecht zu dessen Längsachse erstreckenden Fortsätzen befestigt ist, die jeweils eine langlochförmige Öffnung der Armaturentafel durchragen und sich in den Fahrgastraum erstrecken.

Aufgrund dieser Maßnahmen befindet sich der Handgriff in einem für den Benutzer gut erreichbaren Griffbereich und ist damit ergonomisch angeordnet. Des Weiteren gewährleistet die Platzierung in der Armaturentafel einen freien Durchgang zwischen den beiden vorderen Sitzen des Kraftfahrzeuges und die Anordnung einer Mittelkonsole kann entfallen. Im Weiteren sind Fahrzeuginsassen vor Verletzungen an Bauteilen der Feststellbremse geschützt und eine stabile Lagerung des Handgriffs ist bereitgestellt.

Nach einer vorteilhaften Weiterbildung der Erfindung ragt der Handgriff im Bereich eines Schaltknüppels in den Fahrgastraum und durch eine schräg nach oben gerichtete Kraftbeaufschlagung erfolgt ein Anziehen der Feststellbremse. Somit weist die Hauptbeaufschlagungsrichtung des Handgriffs in Richtung der Schulter eines Benutzers, weshalb das Anziehen der Handbremse unter einem natürlichen Bewegungsablauf sowie dem effektiven Einsatz von Zugkräften zu bewerkstelligen ist. Des Weiteren sind im Bereich des Schaltknüppels der Armaturentafel in der Regel keine Instrumente angeordnet, so dass hier ein ausreichendes Platzangebot für den Handgriff und das damit verbundene Hebelgestänge vorhanden ist.

Vorteilhafterweise ist an dem freien Ende jedes Fortsatzes ein unterer Lenker des Hebelgestänges und an einem zu dem freien Ende beabstandeten Ansatz des Fortsatzes ein U-förmiger oberer Lenker des Hebelgestänges angelenkt, wobei die beiden Lenker an Flanschen des Trägers schwenkbar gelagert sind. Durch diese Ausgestaltung des Hebelgestänges unterliegt der Handgriff bei seiner Verlagerung zum Lösen und Anziehen der Feststellbremse lediglich einer geringen Schwenkbewegung und die Hauptbeaufschlagungsrichtung des Handgriffes beim Anziehen der Feststellbremse weist in Richtung der Schulter des Benutzers und damit in Zugrichtung.

Zur Bewerkstelligung einer relativ einfachen Montage an bereits vorhandenen karosseriefesten Bauteilen ist vorzugsweise an den beiden Flanschen eine sich im Freiraum zwischen den Lenkern in Richtung des Handgriffs erstreckende Befestigungskonsole zur Festlegung des Trägers an einem einen Schaltknüppel lagernden Schaltgehäuse befestigt.

Für die Halterung von Instrumenten in der Armaturentafel weist zweckmäßigerweise die Befestigungskonsole mindestens eine sich hinter der Armaturentafel erstreckende Gerätehalterung auf.

Zur zusätzlichen Stabilisierung der Befestigungskonsole bzw. der Armaturentafel ist vorzugsweise die einstückig mit der Befestigungskonsole ausgebildet Gerätehalterung an der Armaturentafel befestigt.

Es versteht sich, dass die vorstehend und nachstehend noch zu erläuternden Merkmale nicht nur in der jeweils angegebenen Kombination, sondern auch in anderen Kombinationen verwendbar sind. Der Rahmen der vorliegenden Erfindung ist nur durch die Ansprüche definiert.

Die Erfindung wird im Folgenden anhand eines Ausführungsbeispieles unter Bezugnahme auf die zugehörigen Zeichnungen näher erläutert. Es zeigen:

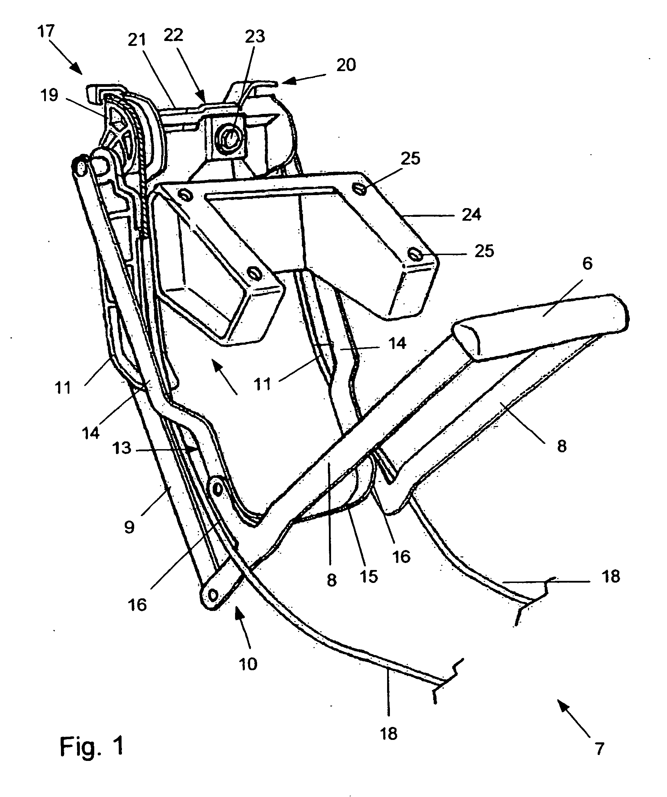

- Fig. 1: eine perspektivische Darstellung einer erfindungsgemäßen Feststellbremse,

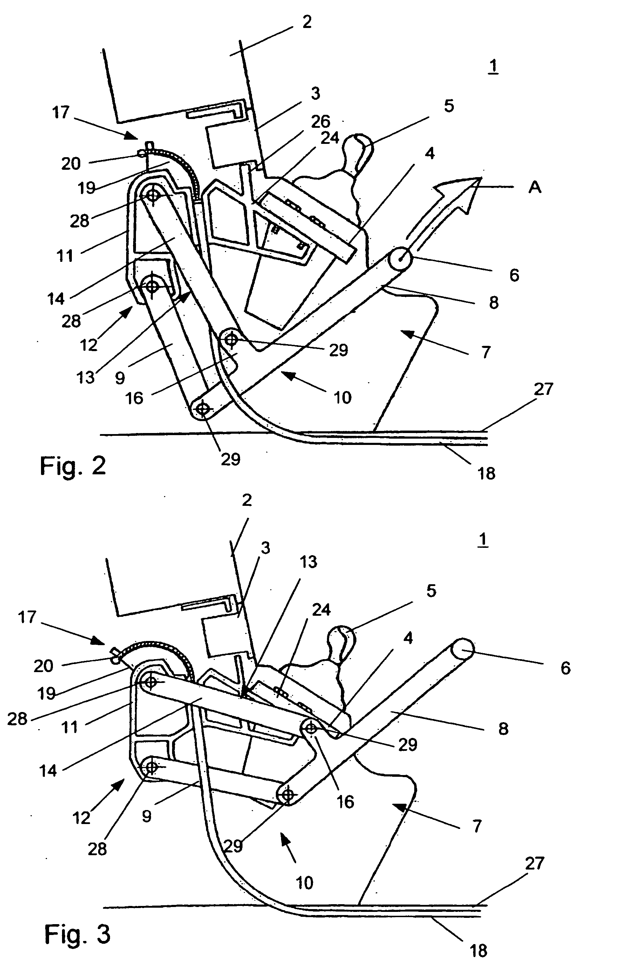

- Fig. 2: eine Darstellung eines Teilschnittes durch ein erfindungsgemäßes Kraftfahrzeug mit einer Feststellbremse nach Fig. 1 in einer gelösten Position und
- Fig. 3: eine Darstellung nach Fig. 2 mit der Feststellbremse in einer angezogenen Position.

Das Kraftfahrzeug weist in seinem Fahrgastraum 1 eine Armaturentafel 2 auf, die sich ausgehend von einer Windschutzscheibe in Richtung eines Bodens 3 erstreckt. In die Armaturentafel 2 sind ein Instrument 3 sowie ein in einem Schaltgehäuse 4 gelagerter Schaltknüppel 5 angeordnet. Unterhalb des Schaltknüppels 5 ragt ein Handgriff 6 einer Feststellbremse 7 in den Fahrgastraum 1.

Der Handgriff 6 ist zwischen zwei sich senkrecht zu dessen Längsachse erstreckenden Fortsätzen 8 befestigt, die die Armaturentafel 2 durchragen und an ihrem freien Ende jeweils einen unteren Lenker 9 eines Hebelgestänges 10 lagern, wobei die unteren Lenker 9 an Flanschen 11 eines Trägers 12 schwenkbar angeordnet sind. Jeder Fortsatz 8 weist beabstandet zu seinem freien Ende einen in Richtung des Trägers 12 weisenden Ansatz 16 zur Halterung eines oberen Lenkers 13 auf, der U-förmig ausgebildet ist, wobei die freien Enden der Schenkel 14 beabstandet zu den unteren Lenkern 9 an den Flanschen 11 des Trägers 12 angeordnet sind und sich der die beiden Schenkel 14 verbindende Steg 15 zwischen den beiden Ansätzen 16 erstreckt. Der obere Lenker 13, der länger als der untere Lenker 9 bemessen ist, steht mit einer Kopplungsvorrichtung 17 für Bremsseile 18 in Verbindung, die zwei drehfest miteinander verbundene Seilscheibensegmente 19 mit jeweils zugeordneter Bremsseilbefestigung 20 umfasst. Die beiden Seilscheibensegmente 19 sind über einen Steg 21 miteinander gekoppelt und stehen mit einer Justiervorrichtung 22 zum Vorspannen der Bremsseile 18 in Verbindung. Der Justiervorrichtung 22 ist eine Stellschraube 23 zugeordnet, die zum Verdrehen der gekoppelten Seilscheibensegmente 19 zwischen der Bremsseilbefestigung 20 und dem die Seilscheibensegmente 19 verbindenden Steg 21 wirkt.

In der dargestellten Einbausituation der Feststellbremse 7 liegen flanschseitige Lagerstellen 28 der unteren Lenker 9 und des oberen Lenkers 13 im Wesentlichen senkrecht übereinander und gegenüberliegende fortsatzseitige Lagerstellen 29 sind in vertikaler Richtung versetzt zueinander ausgerichtet, wobei die Lagerstelle 29 des oberen Lenkers 13 in Fahrtrichtung hinter der Lagerstelle 29 der unteren Lenker 9 angeordnet ist.

Zur Befestigung des Trägers 12 an dem Schaltgehäuse 4 ist eine an den Flanschen 11 festgelegte Befestigungskonsole 24 vorgesehen, die sich in Richtung der Fortsätze 8 zwischen den Flanschen 11 erstreckt. In die Befestigungskonsole 24 sind Gewindebohrungen 25 zum Festschrauben des Trägers 12 an dem Schaltgehäuse 4 eingelassen. Im Weiteren weist die Befestigungskonsole 24 eine sich hinter der Armaturentafel 2 nach oben erstreckende Gerätehalterung 26 zur Befestigung des Instrumentes 3 auf.

Das Anziehen der Feststellbremse erfolgt in Richtung des Pfeils A, in dem der Benutzer der Feststellbremse den Handgriff 6 mit einer in Richtung seiner Schulter weisenden Zugkraft beaufschlagt. Hierbei erfährt der Handgriff 6 lediglich eine geringfügige Schwenkbewegung aufgrund der Kreisbahn, die die freien Enden der Fortsätze 8 beschreiben und wird hauptsächlich geradlinig in Richtung des Benutzers verlagert. Die Bewegungsvektoren des Handgriffs 6 sind durch die Dimensionierung und Anordnung sowohl der unteren Lenker 9 als auch des oberen Lenkers 13 an den Flanschen 11 des Trägers 12 und an den den Handgriff 6 halternden Fortsätzen 8 und durch die Positionierung der Lagerstellen 28 an den Flanschen 11 sowie der Lagerstellen 29 an den Fortsätzen 8 bzw. den Ansätzen 16 bestimmt. Um nicht dargestellte Bremselemente der Feststellbremse zu beaufschlagen, verdreht der obere Lenker 13 die beiden Seilscheibensegmente 19, was zu einer Zugbelastung der unter dem Boden 27 verlaufenden Bremsseile 18 führt. Das Lösen der Feststellbremse bzw. einer ihr zugeordneten Rasteinrichtung kann beispielsweise mittels eines im Fußraum angeordneten Pedals erfolgen.

### Bezugszeichenliste

- 1.: Fahrgastraum
- 2.: Armaturentafel
- 3.: Instrument
- 4.: Schaltgehäuse
- 5.: Schaltknüppel
- 6.: Handgriff
- 7.: Feststellbremse
- 8.: Fortsatz
- 9.: unterer Lenker
- 10.: Hebelgestänge
- 11.: Flansch
- 12.: Träger
- 13.: oberer Lenker
- 14.: Schenkel
- 15.: Steg
- 16.: Ansatz
- 17.: Kopplungsvorrichtung
- 18.: Bremsseil
- 19.: Seilscheibensegment
- 20.: Bremsseilbefestigung
- 21.: Steg
- 22.: Justiervorrichtung
- 23.: Stellschraube
- 24.: Befestigungskonsole
- 25.: Gewindebohrung
- 26.: Gerätehalterung
- 27.: Boden
- 28.: Lagerstelle
- 29.: Lagerstelle

- A: Pfeil

## Patentansprüche

1. Feststellbremse für ein Kraftfahrzeug mit einem einen Handgriff (6) über ein mindestens einen oberen (13) und einen unteren Lenker (9) umfassendes Hebelgestänge (10) lagernden Träger (12) und einer bei einer Verlagerung des Handgriffs (6) mindestens ein Bremsseil (18) beaufschlagenden Kopplungsvorrichtung (17), wobei der obere Lenker (13) und der untere Lenker (9) derart an mindestens einem senkrecht zum Handgriff (6) erstreckenden Fortsatz (8) und/oder an einem sich in Richtung des Trägers (12) erstreckenden, zum freien Ende beabstandeten Ansatz (16) des Fortsatzes (8) beabstandet zueinander gelagert sind, dass eine Beaufschlagungsrichtung des Handgriffes (6) parallel zu einer Längsachse des Fortsatzes (8) ausgerichtet ist, **dadurch gekennzeichnet, dass** der Handgriff (6) jeweils endseitig mit einem einen Ansatz (16) aufweisenden Fortsatz (8) versehen ist, wobei an jedem Fortsatz (8) ein unterer Lenker (9) und an jedem Ansatz ein oberer Lenker (13) unter Zwischenordnung des Trägers (12) angelenkt ist und der Ansatz (16) zum freien Ende des Fortsatzes (8) beabstandet ist.

2. Feststellbremse nach Anspruch 1, **dadurch gekennzeichnet, dass** der obere Lenker (13) U-förmig ausgebildet ist, wobei die freien Enden der Schenkel (14) an dem Träger (12) gelagert sind und der die Schenkel (14) verbindende Steg (15) sich zwischen den beiden Ansätzen (16) erstreckt.

3. Feststellbremse Anspruch 1 oder 2, **dadurch gekennzeichnet, dass** die unteren Lenker (9) und der obere Lenker (13) zueinander beabstandet an Flanschen (11) des Trägers (12) angelenkt sind.

4. Feststellbremse nach einem der Ansprüche 1 bis 3, **dadurch gekennzeichnet, dass** der Träger (12) eine an den Flanschen (11) festgelegte Befestigungskonsole (24) umfasst.

5. Feststellbremse nach Anspruch **4, dadurch gekennzeichnet, dass** sich die Befestigungskonsole (24) in Richtung des Handgriffs (6) erstreckt.

6. Feststellbremse nach Anspruch 4 oder 5, **dadurch gekennzeichnet, dass** die Befestigungskonsole (24) derart ausgestaltet ist, dass sie zur Befestigung an einem einen Schaltknüppel (5) lagernden Schaltgehäuse (4) hinter einer Armaturentafel (2) dient.

7. Feststellbremse nach einem der Ansprüche 1 bis 6, **dadurch gekennzeichnet, dass** der obere Lenker (13) die Kopplungsvorrichtung (17) beaufschlagt.

8. Feststellbremse nach einem der Ansprüche 1 bis 7, **dadurch gekennzeichnet, dass** die Kopplungsvorrichtung (17) mit zwei drehfest miteinander verbundenen Seilscheibensegmenten (19) mit jeweils zugeordneter Bremsseilbefestigung (20) versehen ist.

9. Feststellbremse nach Anspruch 8, **dadurch gekennzeichnet, dass** die Seilscheibensegmente (19) über einen Steg (21) miteinander gekoppelt sind.

10. Feststellbremse nach Anspruch 8 oder 9, **dadurch gekennzeichnet, dass** die Seilscheibensegmente (19) mit einer Justiervorrichtung (22) zum Vorspannen der Bremsseile (18) verbunden sind.

11. Feststellbremse nach Anspruch 10, **dadurch gekennzeichnet, dass** die Justiervorrichtung (22) eine Stellschraube (23) umfasst, die zum Verdrehen der Seilscheibensegmente (19) zwischen der Bremsseilbefestigung (20) und dem die Seilscheibensegmente (19) verbindenden Steg (21) wirkt.

12. Kraftfahrzeug mit einer Feststellbremse nach einem der Ansprüche 1 bis 11 und mit einer Armaturentafel, wobei der Träger (12) hinter der Armaturentafel (2) angeordnet ist und der Handgriff (6) zwischen zwei sich senkrecht zu dessen Längsachse erstreckenden Fortsätzen (8) befestigt ist, die jeweils eine langlochförmige Öffnung der Armaturentafel (2) durchragen und sich in den Fahrgastraum (1) erstrecken.

13. Kraftfahrzeug nach Anspruch 12, **dadurch gekennzeichnet, dass** der Handgriff (6) im Bereich eines Schaltknüppels (5) in den Fahrgastraum (1) ragt und durch eine schräg nach oben gerichtete Kraftbeaufschlagung ein Anziehen der Feststellbremse erfolgt.

14. Kraftfahrzeug nach Anspruch 12, **dadurch gekennzeichnet, dass** an dem freien Ende jedes Fortsatzes (8) ein unterer Lenker (9) des Hebelgestänges (10) und an einem zu dem freien Ende beabstandeten Ansatz (16) des Fortsatzes (8) ein U-förmiger oberer Lenker (13) des Hebelgestänges (10) angelenkt ist, wobei die beiden Lenker (9, 13) an Flanschen (11) des Trägers (12) schwenkbar gelagert sind.

15. Kraftfahrzeug nach Anspruch 14, **dadurch gekennzeichnet, dass** an den beiden Flanschen (11) eine sich im Freiraum zwischen den Lenkern (9, 13) in Richtung des Handgriffs (6) erstreckende Befestigungskonsole (24) zur Festlegung des Trägers (12) an einem einen Schaltknüppel (5) lagernden Schaltgehäuse (4) befestigt ist.

16. Kraftfahrzeug nach Anspruch 15, **dadurch gekennzeichnet, dass** die Befestigungskonsole (24) mindestens eine sich hinter der Armaturentafel (2) erstreckende Gerätehalterung (26) aufweist.

17. Kraftfahrzeug nach Anspruch 16, **dadurch gekennzeichnet, dass** die einstückig mit der Befestigungskonsole (24) ausgebildete Gerätehalterung (25) an der Armaturentafel (2) befestigt ist.

## Claims

1. A parking brake for a motor vehicle including a carrier means (12) supporting a handle (6) by means of a system of levers (10) comprising at least one upper (13) and one lower guide bar (9) and a coupling device (17) which acts on at least one brake cable (18) when the handle (6) is displaced, wherein the upper guide bar (13) and the lower guide bar (9) are mounted in mutually spaced manner on at least one extension (8) extending perpendicularly relative to the handle (6) and/or on a lug (16) of the extension (8) that is spaced from the free end thereof and extends in the direction of the carrier means (12) in such a manner that an actuating direction of the handle (6) is aligned in parallel with a longitudinal axis of the extension (8), **characterized in that** the handle (6) is provided at each end thereof with an extension (8) comprising a lug (16), wherein a lower guide bar (9) is articulated to each extension (8) and an upper guide bar (13) is articulated to each lug through the intermediate arrangement of the carrier means (12) and the lug (16) is spaced from the free end of the extension (8).

2. A parking brake in accordance with Claim 1, **characterized in that** the upper guide bar (13) is U-shaped, wherein the free ends of the arms (14) are mounted on the carrier means (12) and the web (15) connecting the arms (14) extends between the two lugs (16).

3. A parking brake in accordance with Claim 1 or 2, **characterized in that** the lower guide bars (9) and the upper guide bar (13) are articulated in mutually spaced manner to flanges (11) of the carrier means (12).

4. A parking brake in accordance with any of the Claims 1 to 3, **characterized in that** the carrier means (12) comprises an attachment bracket (24) fixed to the flanges (11).

5. A parking brake in accordance with Claim 4, **characterized in that** the attachment bracket (24) extends in the direction of the handle (6).

6. A parking brake in accordance with Claim 4 or 5, **characterized in that** the attachment bracket (24) is designed in such a manner that it serves for attachment to a gear case (4) supporting a gear lever (5) behind an instrument panel (2).

7. A parking brake in accordance with any of the Claims 1 to 6, **characterized in that** the upper guide bar (13) acts on the coupling device (17).

8. A parking brake in accordance with any of the Claims 1 to 7, **characterized in that** the coupling device (17) is provided with two deflection pulley segments (19) which are connected together in relatively non-rotatable manner and each of which has an associated brake cable securing means (20).

9. A parking brake in accordance with Claim 8, **characterized in that** the deflection pulley segments (19) are coupled together by a bar (21).

10. A parking brake in accordance with Claim 8 or 9, **characterized in that** the deflection pulley segments (19) are connected to an adjusting device (22) for pretensioning the brake cables (18).

11. A parking brake in accordance with Claim 10, **characterized in that** the adjusting device (22) comprises a set screw (23) which is effective for rotating the deflection pulley segments (19) between the brake cable securing means (20) and the web (21) connecting the deflection pulley segments (19).

12. A motor vehicle including a parking brake in accordance with any of the Claims 1 to 11 and also including an instrument panel, wherein the carrier means (12) is arranged behind the instrument panel (2) and the handle (6) is fixed between two extensions (8) which extend perpendicularly with respect to the longitudinal axis of the handle and each of which pass through an elongate opening in the instrument panel (2) and extends into the passenger compartment (1).

13. A motor vehicle in accordance with Claim 12, **characterized in that** the handle (6) projects into the passenger compartment (1) in the vicinity of a gear lever (5) and application of the parking brake is effected by an actuating force which is applied in an upwardly inclined direction.

14. A motor vehicle in accordance with Claim 12, **characterized in that** a lower guide bar (9) of the system of levers (10) is articulated to the free end of each extension (8) and a U-shaped upper guide bar (13) of the system of levers (10) is articulated to a lug (16) of the extension (8) that is spaced from the free end thereof, wherein the two guide bars (9, 13) are mounted on flanges (11) of the carrier means (12) in pivotal manner.

15. A motor vehicle in accordance with Claim 14, **characterized in that** an attachment bracket (24) is fixed to the two flanges (11), said bracket being used for fixing the carrier means (12) to a gear case (4) supporting a floor mounted gear lever (5) and extending in the direction of the handle (6) in the free space between the guide bars (9, 13).

16. A motor vehicle in accordance with Claim 15, **characterized in that** the attachment bracket (24) comprises at least one equipment support (26) which extends behind the instrument panel (2).

17. A motor vehicle in accordance with Claim 16, **characterized in that** the equipment support (25) formed in one-piece with the attachment bracket (24) is fixed to the instrument panel (2).

## Revendications

1. Frein de stationnement pour un véhicule automobile, comprenant un support (12), servant au montage en palier d'une poignée (6) par l'intermédiaire d'une tringlerie à levier (10) comprenant au moins un bras articulé supérieur (13) et un bras articulé inférieur (9), et un dispositif d'accouplement (17), sollicitant au moins un câble de frein (18) lors d'un déplacement de la poignée (6), sachant que le bras articulé supérieur (13) et le bras articulé inférieur (9) sont montés en palier à distance l'un de l'autre sur au moins un prolongement (8) s'étendant perpendiculairement à la poignée (6) et/ou sur un appendice (16) du prolongement (8) s'étendant dans la direction du support (12) et situé à distance de l'extrémité libre, de manière à ce qu'une direction de sollicitation de la poignée (6) soit disposée parallèlement à un axe longitudinal du prolongement (8), **caractérisé en ce que** la poignée (6) est chaque fois munie, côté extrémité, d'un prolongement (8) présentant un appendice (16), sur chaque prolongement (8) étant articulé un bras articulé inférieur (9) et, sur chaque appendice étant articulé un bras articulé supérieur (13), avec interposition du support (12) et **en ce que** l'appendice (16) est situé à distance de l'extrémité libre du prolongement (8).

2. Frein de stationnement selon la revendication 1, **caractérisé en ce que** le bras articulé supérieur (13) est conformé en U, les extrémités libres des branches (14) étant montées en palier sur le support (12) et la traverse (15) reliant les branches (14) s'étendant entre les deux appendices (16).

3. Frein de stationnement selon la revendication 1 ou 2, **caractérisé en ce que** les bras articulés inférieurs (9) et le bras articulé supérieur (13) sont articulés, à distance les uns par rapport aux autres, sur des flancs (11) du support (12).

4. Frein de stationnement selon l'une des revendications 1 à 3, **caractérisé en ce que** le support (12) comprend une console de fixation (24) fixée sur les flancs (11).

5. Frein de stationnement selon la revendication 4, **caractérisé en ce que** la console de fixation (24) s'étend dans la direction de la poignée (6).

6. Frein de stationnement selon la revendication 4 ou 5, **caractérisé en ce que** la console de fixation (24) est réalisée de manière à ce qu'elle serve à la fixation à un boîtier de manoeuvre (4), servant au montage en palier sur un levier de manoeuvre (5), derrière un tableau de bord (2).

7. Frein de stationnement selon l'une des revendications 1 à 6, **caractérisé en ce que** le bras articulé supérieur (13) sollicite le dispositif d'accouplement (17).

8. Frein de stationnement selon l'une des revendications 1 à 7, **caractérisé en ce que** le dispositif d'accouplement (17) est muni de deux segments de disques à câble (19) reliés ensemble de façon assujettie à rotation, ayant chacun un dispositif de fixation de câble de frein (20) associée.

9. Frein de stationnement selon la revendication 8, **caractérisé en ce que** les segments de disques à câble (19) sont couplés ensemble par l'intermédiaire d'une traverse (21).

10. Frein de stationnement selon la revendication 8 ou 9, **caractérisé en ce que** les segments de disques à câble (19) sont reliés au moyen d'un dispositif d'ajustement (22) pour précontraindre les câbles de frein (18).

11. Frein de stationnement selon la revendication 10, **caractérisé en ce que** le dispositif d'ajustement (22) comprend une vis de réglage (23), agissant pour faire tourner les segments de disques à câble (19) entre le dispositif de fixation de câble de frein (20) et la traverse (21) reliant les segments de disque à câble (19).

12. Véhicule automobile muni d'un frein de stationnement selon l'une des revendications 1 à 11 et d'un tableau de bord, le support (12) étant disposé derrière le tableau de bord (2) et la poignée (6) étant fixée entre deux prolongements (8) s'étendant perpendiculairement à son axe longitudinal et traversant chacun une ouverture, en forme de trou oblong, du tableau de bord (2) et s'étendant dans l'habitacle (1).

13. Véhicule automobile selon la revendication 12, **caractérisé en ce que** la poignée (6) pénètre dans la zone d'un levier de manoeuvre (5), dans l'habitacle (1), et **en ce que** un serrage du frein de stationnement se fait par sollicitation par une force orientée obliquement vers le haut.

14. Véhicule automobile selon la revendication 12, **caractérisé en ce que** sur l'extrémité libre de chaque prolongement (8) est articulé un bras articulé inférieur (9) de la tringlerie à levier (10) et sur un appendice (16) du prolongement (8), situé à distance de l'extrémité libre, est articulé un bras articulé supérieur (13) en forme de U de la tringlerie à levier (10), sachant que les deux bras articulés (9,13) sont montés à pivotement sur des flancs (11) du support (12).

15. Véhicule automobile selon la revendication 14, **caractérisé en ce qu'**une console de fixation (24), s'étendant en direction de la poignée (6), est fixée, dans l'espace libre existant entre les bras articulés (9,13), sur les deux flancs (11) pour assurer la fixation du support (12) sur un boîtier de manoeuvre (4) servant au montage en palier du levier de manoeuvre (5).

16. Véhicule automobile selon la revendication 15, **caractérisé en ce que** la console de fixation (24) présente au moins un dispositif de fixation d'appareil (26) s'étendant derrière le tableau de bord (2).

17. Véhicule automobile selon la revendication 16, **caractérisé en ce que** le dispositif de fixation d'appareil (25), qui est réalisé d'une seule pièce avec la console de fixation (24), est fixé sur le tableau de bord (2).
